# EUROPÄISCHE PATENTSCHRIFT

(11) **EP 2 183 966 B1**
(45) Veröffentlichungstag und Bekanntmachung des Hinweises auf die Patenterteilung: **26.12.2018**
(21) Anmeldenummer: 09013732.4
(22) Anmeldetag: 31.10.2009
(51) Int. Cl.: A01K 7/06, A01K 39/02

(54) **Tiertränke**
Drinking trough
Abreuvoir

(30) Priorität: 11.11.2008 DE 102008056832; 12.12.2008 DE 102008061994
(43) Veröffentlichungstag der Anmeldung: 12.05.2010
(73) Patentinhaber: LUBING Maschinenfabrik Ludwig Bening GmbH & Co. KG, 49406 Barnstorf (DE)
(72) Erfinder: Schumacher, Egon, 49406 Barnstorf (DE); Meyer, Wolfgang, 49406 Barnstorf (DE)
(74) Vertreter: Möller, Friedrich

(56) Entgegenhaltungen:
- US-A- 2 706 966
- US-A- 3 537 430
- US-A- 4 269 147
- US-A- 5 282 440
- US-B1- 6 910 444

## Beschreibung

Die Erfindung betrifft eine Tiertränke, vorzugsweise eine Strangtränke, gemäß dem Oberbegriff des Anspruchs 1.

Tiertränken der angesprochenen Art dienen dazu, den Wasserbedarf von Tieren, insbesondere Nutztieren, zu decken. Üblicherweise sind solche Tränken so ausgebildet, dass die Tiere ihren Wasserbedarf selbsttätig decken können.

Vor allem bei der Massentierhaltung kleiner Tiere, insbesondere Geflügel, werden sogenannte Strangtränken, eingesetzt. Bekannte Strangtränken verfügen über eine Vielzahl von Tränkeventilen, die einem länglichen Rohrstrang zugeordnet sind, wodurch die Tränkeventile mit Wasser versorgbar sind. Die Tränkeventile sind von den Tieren selbst betätigbar.

Wenn kein Tränkeventil oder nur wenige Tränkeventile von den Tieren betätigt werden, steht das Wasser im Rohrstrang still. Das kann insbesondere nachts, wenn über einen längeren Zeitraum hinweg die Tiere kein Wasser aufnehmen, dazu führen, dass die üblicherweise im Wasser vorhandenen Keime überproportional zunehmen. Insbesondere in wärmeren Regionen wird das Wasser außerdem stark erwärmt, wenn es längere Zeit im Rohrstrang bleibt. Bei solchen relativ hohen Temperaturen wird die starke Vermehrung der Keime im Wasser erheblich beschleunigt. Das über längere Zeit im Rohrstrang stillstehende Wasser kann aber auch dazu führen, dass sich Feststoffpartikel im Wasser absetzen und in die gegen Verschmutzung empfindlichen Tränkeventile gelangen, die dadurch funktionsunfähig werden können. Schließlich führt ein längerer Stillstand von mit Zusätzen versehenem Wasser dazu, dass eine Entmischung stattfindet.

Aus der US 6 910 444 B1 und der US 4 269 147 A sind Tiertränken bekannt, die über Wasserumlaufleitungen aus hintereinander angeordneten Rohrsträngen verfügen.

Aus der US 2 706 966 A ist eine Tiertränke bekannt, die eine Wasserumlaufleitung aus zwei parallelen Rohrsträngen aufweist, die mit Abstand parallel nebeneinander verlaufen.

Die US 5 282 440 A hat eine Tiertränke zum Inhalt, die zwei parallele Rohrstränge aufweist, die durch einen Steg miteinander verbunden sind. Nur ein unterer Rohrstrang bildet eine Wasserversorgungsleitung. Ein oberer Rohrstrang dient nur zur Verstärkung und Stabilisierung des einzigen zur Wasserversorgung dienenden Rohrstrangs.

Ausgehend vom Vorstehenden liegt der Erfindung die Aufgabe zugrunde, eine Tiertränke zu schaffen, die eine problemlose Wasserversorgung der Tiere gewährleistet und die gestellten hygienischen Anforderungen erfüllt.

Eine Tiertränke zur Lösung dieser Aufgabe weist die Merkmale des Anspruchs 1 auf. Dabei ist die Wasserversorgung als eine Wasserumlaufleitung ausgebildet. Dadurch entsteht ein Wasserkreislauf. Das Wasser wird permanent oder zumindest periodisch umgewälzt, wodurch es immer in Bewegung ist, auch wenn alle Tränkeventile längere Zeit nicht benutzt werden. Das Wasser, wobei es sich um reines Leitungswasser, aber auch mit Zusätzen, beispielsweise Medikamenten, Nährstoffen oder dergleichen versehenes Wasser handeln kann, strömt ständig an den Tränkeventilen vorbei. Auf diese Weise kann sich das Wasser, insbesondere wenn es irgendwelche Zusätze enthält, nicht entmischen. Es können sich auch keine im Wasser enthaltenen Feststoffe während der Stillstandzeiten des Wassers absetzen. Die Wasserumlaufleitung ist aus zwei Rohrsträngen gebildet, die an ihren Enden wasserführend verbunden sind. Außerdem ist es vorgesehen, die Rohrstränge zusammenhängend auszubilden. Bevorzugt sind die beiden voneinander etwas beabstandeten Rohrstränge durch einen Steg miteinander verbundenen, wobei der Steg und die an seinen gegenüberliegenden Längsrändern angeordneten Rohrstränge einstückig sind. Die Rohrstränge hängen so nahtlos zusammen, wodurch auch hygienische Probleme durch festgesetzten Schmutz vermieden werden.

Bei einer bevorzugten Weiterbildung der Tiertränke ist es vorgesehen, dass der Rohrstrang einen weiteren aufrechten Steg aufweist. Durch diesen aufrechten Steg wird der Rohrstrang nicht nur verstärkt; der Steg kann auch zur Aufhängung der Strangtränke im Stall dienen und er unterbindet, dass die Tiere, insbesondere Geflügel, auf den Rohrsträngen sitzen und die übrigen Tiere beim Tränken stören.

Bevorzugt ist der Steg einstückig mit dem Rohrstrang verbunden, vorzugsweise an demselben angeformt. Durch diese einteilige Gestaltung des Stegs und des Rohrstrangs lässt sich die Tiertränke leicht sauber halten. Vor allem werden Nahtstellen vermieden, in denen sich Schmutz festsetzen könnte.

Es ist des Weiteren vorgesehen, einem der Rohrstränge, vorzugsweise einem unteren der übereinander angeordneten Rohrstränge, alle Tränkeventile zuzuordnen. Dieser untere Rohrstrang ist für die Tiere in der für Strangtränken üblichen Weise von unten oder von der Seite zugänglich, indem die Tränkeventile teilweise unten aus dem Rohrstrang herausragen. Wenn das Wasser in die eine Richtung durch den unteren Rohrstrang an den Tränkeventilen vorbeigeströmt ist, wird es im oberen Rohrstrang wieder zurückgeleitet an den Anfang des unteren Rohrstrangs. Es ist aber auch denkbar, beiden Rohrsträngen Tränkeventile zuzuordnen. Zweckmäßigerweise sind dann die beiden zur Bildung der Wasserumlaufleitung dienenden Rohrstränge mit ausreichendem Abstand nebeneinander angeordnet. Es können so mehrere Tränkeventile in einem bestimmten Flächenbereich untergebracht werden als bei bekannten Strangtränken.

Bei einer bevorzugten Weiterbildung der zuvor beschriebenen Tiertränke ist der Wasserversorgung mindestens eine Behandlungseinrichtung für das zur Speisung der Tränkeventile dienende Wasser zugeordnet. Dadurch ist eine Aufbereitung des Wassers möglich. Das gilt insbesondere für den Fall, bei dem das Wasser durch Umwälzen immer wieder an den Tränkeventilen vorbeiströmt, wodurch es wiederholt aufbereitet werden kann.

Bei der Behandlungsvorrichtung kann es sich um eine solche handeln, die Schadstoffe wie Bakterien, Keime, Pilze oder dergleichen aus dem Wasser eliminiert. Dadurch wird eine mikrobielle Belastung des den Tieren zuzuführenden Trinkwassers vermieden oder zumindest so weit herabgesetzt, dass vorgegebene Grenzwerte nicht überschritten werden. Das Wasser wird desinfiziert und/oder sterilisiert. Bevorzugt erfolgt die Behandlung des Wassers durch Bestrahlung. Zweckmäßigerweise wird die Behandlungseinrichtung durch mindestens eine Ultraviolettlampe (UV-Lampe) gebildet, wodurch das zu behandelnde Wasser für die Tiere einer UV-Strahlung unterzogen wird. Hierdurch lässt sich besonders eine Entkeimung des Wassers für die Tiere (Tränkwasser) vornehmen. Alternativ oder zusätzlich ist auch eine Behandlungseinrichtung denkbar, die als Temperierungseinrichtung des Wassers ausgebildet ist. Dadurch kann das Wasser je nach Bedarf gekühlt oder erwärmt werden. In heißen Regionen wird bevorzugt das Wasser gekühlt, wodurch die Vermehrungsrate mikrobieller Organismen im Wasser, insbesondere von Keimen, reduziert wird. In kalten Regionen kann es erforderlich sein, das Wasser zu erwärmen, damit die Tiere kein zu kaltes Wasser erhalten, was vor allem bei jüngeren Tieren zu Krankheiten führen könnte.

Des Weiteren ist es denkbar, dass die Tiertränke eine Dosiereinrichtung, zum Beispiel eine Medikamentiereinrichtung, aufweist. Dadurch können dem Tränkewasser in gezielter Dosierung Medikamente oder auch andere Zusätze, beispielsweise Nährstoffe, zugemischt werden. Insbesondere wenn das Wasser in den Rohrsträngen zirkuliert, kann mit der Dosiereinrichtung eine exakt dosierte Zugabe von Medikamenten und sonstigen Zusätzen erzielt werden.

Eine bevorzugte Weiterbildung der Tiertränke sieht es vor, der Wasserumlaufleitung bzw. den Rohrsträngen eine Pumpe zum Umwälzen des Wassers zum Tränken der Tiere in der Wasserumlaufleitung bzw. den Rohrsträngen zuzuordnen. Die mindestens eine Pumpe dient so als Umwälzpumpe, die die Strömung des Trinkwassers in den Rohrsträngen aufrechterhält, auch wenn an den Tränkeventilen kein Wasser von den Tieren abgenommen wird.

Bei einer bevorzugten Ausgestaltung der Erfindung dient die mindestens eine Pumpe dazu, aus einem Vorratsbehälter die Tränkeventile mit Wasser, nämlich Tränkewasser bzw. Trinkwasser, zu versorgen. Der Vorratsbehälter stellt einen Puffer für das Wasser dar, der gewährleistet, dass die mindestens eine Pumpe ständig mit genügend Wasser versorgt wird, damit sie die Umwälzung des Wassers in den Rohrsträngen ständig aufrechterhalten kann.

Es ist des Weiteren vorgesehen, die Pumpe und/oder Vorratsbehälter benachbarten Enden der beiden Rohrstränge zuzuordnen. Die mindestens eine Pumpe und vorzugsweise auch der Vorratsbehälter führen so zu einer Verbindung der auf der gleichen Seite der Tiertränke sich befindenden, übereinanderliegenden Enden der beiden Rohrstränge. Es kann so das aus einem Rohrstrang zurückfließende Wasser vom Vorratsbehälter aufgenommen werden und aus diesem von der Pumpe das Wasser wieder in den anderen Rohrstrang gepumpt werden. Die benachbarten Enden der Rohrstränge auf der gegenüberliegenden Seite der. Tiertränke brauchen dann lediglich mit einen Überstromkanal verbunden zu werden, von dem das Wasser aus dem einen Rohrstrang in den anderen Rohrstrang geleitet wird. Die beiden Rohrstränge, der Überströmkanal und der Vorratsbehälter mit der Pumpe bilden so zusammen einen Kreislauf der Wasserumlaufleitung.

Dem Vorratsbehälter ist bei einer bevorzugten Ausgestaltung der Erfindung mindestens ein Zulauf für Wasser, vorzugsweise Frischwasser, aus einer Wasserversorgung, beispielsweise einem Brunnen, zugeordnet. Über den Zulauf wird dem Vorratsbehälter Wasser wieder zugeführt und dabei der Vorratsbehälter kontinuierlich wieder aufgefüllt.

Bevorzugt ist dem Zulauf zum Vorratsbehälter ein Ventil zugeordnet, das dem Vorratsbehälter stets so viel Wasser wie notwendig zuführt, indem vom Ventil der Wasserzulauf zum Vorratsbehälter bei Bedarf freigebbar ist. Wird der Tiertränke von den Tieren kein Wasser entnommen, kann der Zulauf von Frischwasser zum Vorratsbehälter vom Ventil gestoppt werden. Bevorzugt ist vorgesehen, dass das Ventil in Abhängigkeit vom Wasserstand im Vorratsbehälter betätigbar ist.

Die Tiertränke kann insbesondere vor dem Zulauf zum Vorratsbehälter einen Druckminderer aufweisen, der den Druck, mit dem aus der Wasserversorgung der Vorratsbehälter mit Frischwasser versorgbar ist, derart begrenzt und reduziert, dass das Wasser aus den von den Tieren geöffneten Tränkeventilen nicht herausspritzt. Der Druckminderer dient vorzugsweise auch zur Aufrechterhaltung eines im Wesentlichen konstanten Wasserpegels im Vorratsbehälter.

Bevorzugt ist es vorgesehen, die Rohrstränge aus mehreren lösbar miteinander verbindbaren Rohrstrangabschnitten zu bilden. Die Rohrstrangabschnitte weisen beide parallelverlaufende Rohrstrangabschnitte und Stegabschnitte auf. Durch das Verbinden einer entsprechenden Anzahl gleicher Rohrstrangabschnitte wird eine Tiertränke der gewünschten Länge und mit parallelen Rohrsträngen geschaffen.

Um die Rohrstrangabschnitte bedarfsgerecht zusammenfügen zu können, ist es weiterhin vorgesehen, sie an ihren benachbarten Enden wasserdicht zu verbinden. Dazu können Backen oder Halbschalen dienen, die eine Verbindung der Rohrstrangabschnitte ohne eine Relativbewegung derselben zulassen. Die Halbschalen oder Backen sind lediglich zusammenzuschrauben, um die Rohrstrangabschnitte zu verbinden. Diese Verbindung ist leicht wieder lösbar. Die benachbarten Enden der Rohrstrangabschnitte können wasserdicht verbunden werden durch den Halbschalen oder Backen zugeordnete Dichtungen, die durch Zusammenschrauben der Halbschalen oder Backen vorgespannt werden.

Ein bevorzugtes Ausführungsbeispiel der Erfindung wird nachfolgend anhand der Zeichnung näher erläutert. In dieser zeigen:
- Fig. 1: eine perspektivische Gesamtansicht einer Tiertränke,

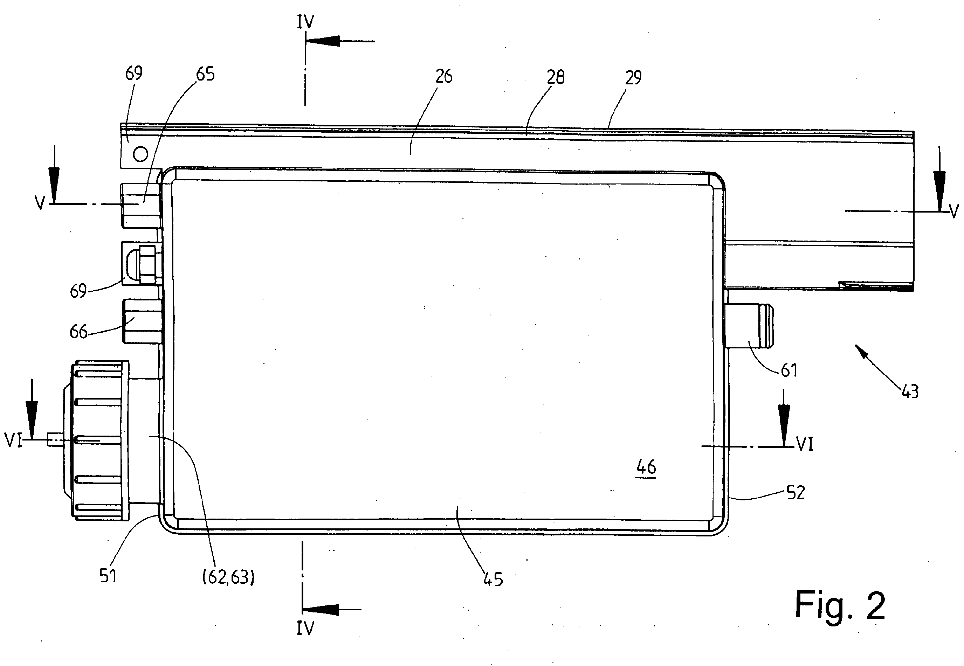

- Fig. 2: eine Seitenansicht einer Technikeinheit der Tiertränke in einer Ansicht II gemäß der Fig. 1,
- Fig. 3: einen vertikalen mittigen Längsschnitt durch die Technikeinheit der Fig. 2,
- Fig. 4: einen Querschnitt IV-IV durch die Technikeinheit,
- Fig. 5: einen Längsschnitt V-V durch die Technikeinheit,

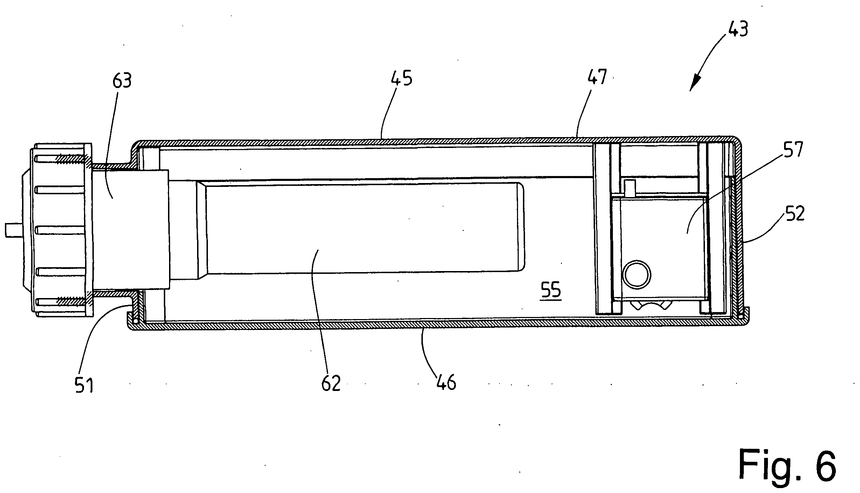

- Fig. 6: einen Längsschnitt VI-VI durch die Technikeinheit,
- Fig. 7: einen Querschnitt durch eine Wasserleitung der Tiertränke,
- Fig. 8: eine Ansicht eines Verbinders zweier Wasserleitungsabschnitte,
- Fig. 9: einen vertikalen Schnitt durch eine Verbindungsstelle ohne die Leitungsabschnitte, und

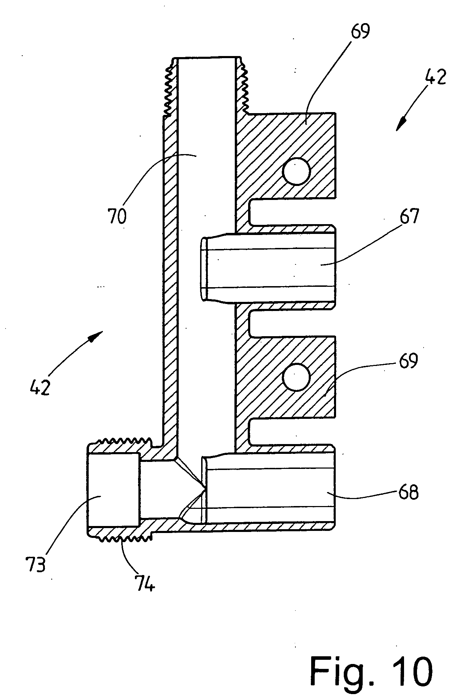

- Fig. 10: einen mittigen Längsschnitt durch einen Rohrstrangverbinder.

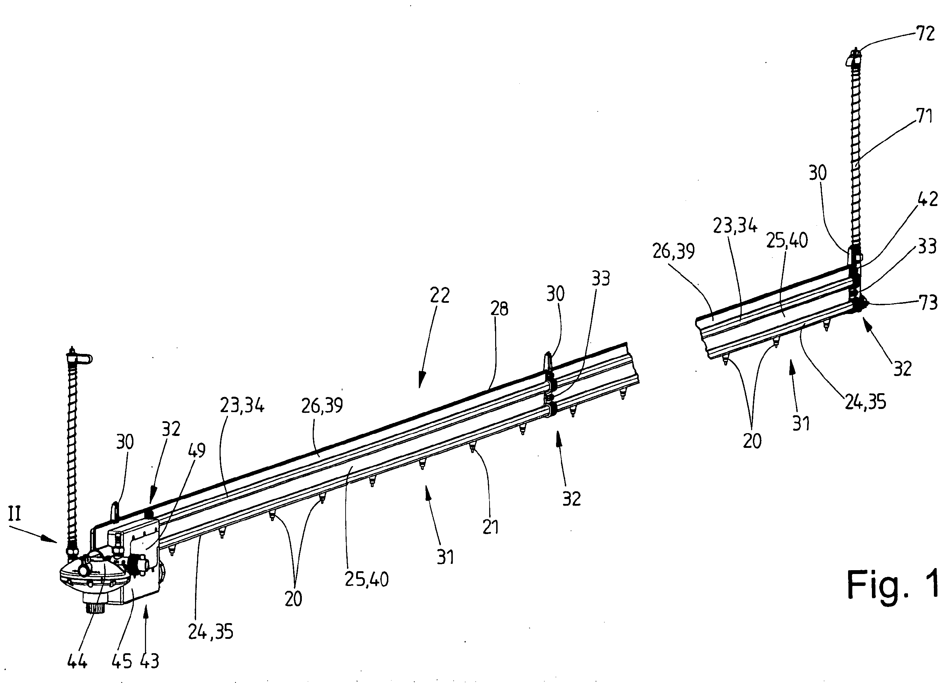

Die Fig. 1 zeigt vollständig und die übrigen Figuren nur teilweise eine als Strangtränke ausgebildete Tiertränke. Die Strangtränke ermöglicht es Tieren, insbesondere Kleintieren, ihren Wasserbedarf selbsttätig zu decken. Eine solche Strangtränke wird üblicherweise bei der Massentierhaltung von Geflügel verwendet. Die Strangtränke wird an in den Figuren nicht gezeigten Seilen im Stall aufgehängt, und zwar mit einem der Größe der Tiere entsprechenden Abstand vom Stallboden, so dass die Tiere die Tränkeventile 20 der Strangtränke bequem erreichen können. Die an sich bekannten Tränkeventile 20 weisen einen Ventilstift 21 auf, den die Tiere mit ihren Schnäbeln am unteren freien Enden anheben und/oder verkippen, wodurch das Tränkeventil 20 geöffnet wird zur Abgabe von Wasser an die Tiere. Nach dem Loslassen des Ventilstifts 21 schließt das Tränkeventil 20 automatisch.

Die Strangtränke verfügt über eine längliche, geradlinige Wasserumlaufleitung 22. Die Wasserumlaufleitung 22 ist so im Stall aufgehängt, dass sie horizontal verläuft. Die Wasserumlaufleitung 22 ist erfindungsgemäß so ausgebildet, dass sie einen geschlossenen Kreislauf des Wassers innerhalb der Strangtränke zulässt. Dazu verfügt die Wasserumlaufleitung 22 über zwei parallele Rohrstränge 23, 24, die sich geradlinig in Längsrichtung der Wasserumlaufleitung 22 erstrecken, und zwar horizontalgerichtet. Beide Rohrstränge 23 und 24 sind mit gleichem Querschnitt versehen, der im gezeigten Ausführungsbeispiel viereckig mit abgerundeten Kanten ausgebildet ist. Die Rohrstränge 23 und 24 können aber auch über andere Querschnitte verfügen. Die Rohrstränge 23, 24 liegen bei der gezeigten Tiertränke mit Abstand übereinander. In diesem Falle sind nur dem unteren Rohrstrang 24 alle Tränkeventile 20 zugeordnet. Die Tränkeventile 20 sind mit gleichmäßigem Abstand über die gesamte Länge des Rohrstrangs 24 verteilt. Die Tränkeventile 20 sind von unten in den Rohrstrang 24 eingeschraubt, und zwar so, dass ein freies, unteres Ende des Ventilstifts 21 gegenüber der unteren Wandung des Rohrstrangs 24 nach unten vorsteht, damit die Ventilstifte 21 der Tränkeventile 20 von den Tieren frei zugänglich sind. Wenn die Rohrstränge 23 und 24 nebeneinander liegen, können beiden Rohrsträngen 23 und 24 Tränkeventile 20 zugeordnet sein.

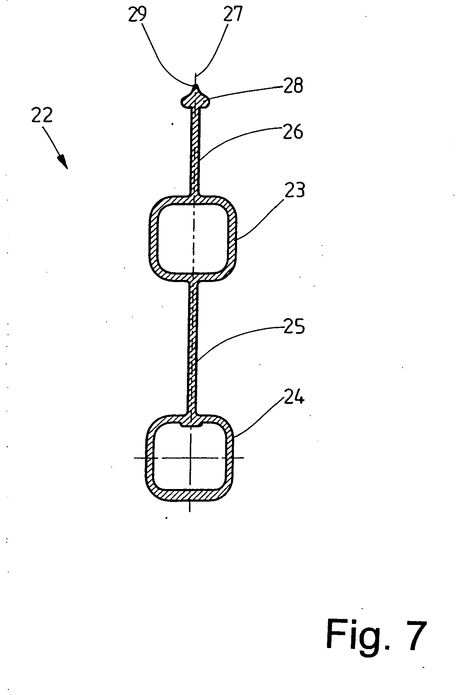

Die mit Abstand übereinanderliegenden Rohrstränge 23 und 24 sind verbunden durch einen aufrechten schmalen Steg 25, der sich in Längsrichtung der parallelen Rohrstränge 23 und 24 erstreckt (Fig. 7). Über den oberen Rohrstrang 23 ist ein weiterer aufrechter Steg 26 angeordnet. Auch dieser Steg 26 läuft in Längsrichtung des Rohrstrangs 23. Die Mittelebenen beider Stege 25 und 26 liegen auf einer gemeinsamen senkrechten Mittelebene 27 der Wasserumlaufleitung 22. Auf dieser Mittelebene 27 liegen auch die Mittelpunkte der Rohrstränge 23 und 24 (Fig. 7). Einer freien oberen Längskante des oberen Stegs 26 ist ein dreieckförmiges Kantenprofil 28 zugeordnet, das eine in Längsrichtung der Wasserumlaufleitung 22 verlaufende Spitze 29 aufweist. Diese Spitze 29 des Kantenprofils 28 verhindert, dass sich Tiere oben auf die Wasserumlaufleitung 22 der Strangtränke setzen. Das Kantenprofil 28 dient auch zur Befestigung von Aufhängern 30 an unteren Enden nicht gezeigter Seile zur hängenden Anordnung der Strangtränke im Stall.

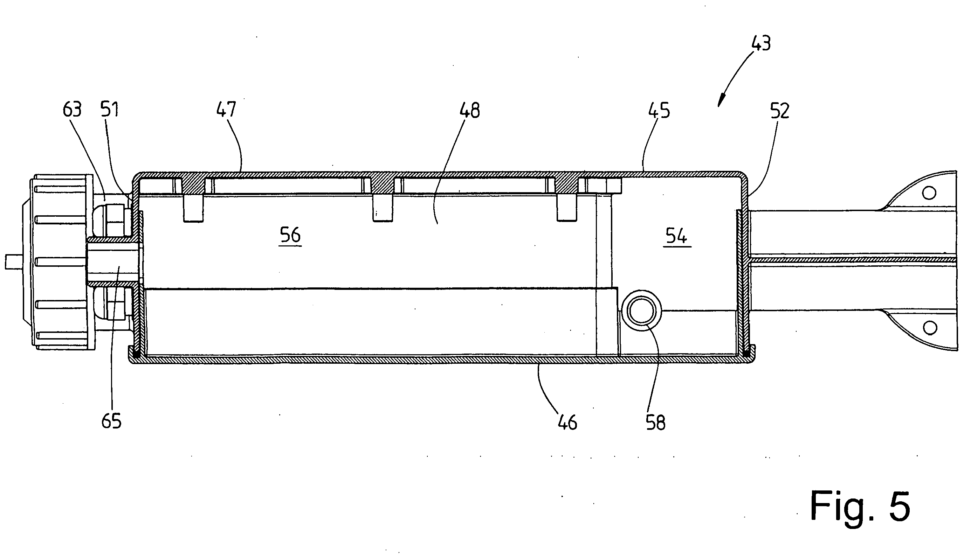

Die Rohrstränge 23, 24, die Stege 25, 26 und das Kantenprofil 28 sind einstückig miteinander verbunden, wodurch die Wasserumlaufleitung 22 keine Nahtstellen aufweist, in denen sich Verschmutzungen, insbesondere Kotreste, festsetzen könnten (Fig. 5). Auf diese Weise lässt sich die gesamte Wasserumlaufleitung 22 leicht säubern.

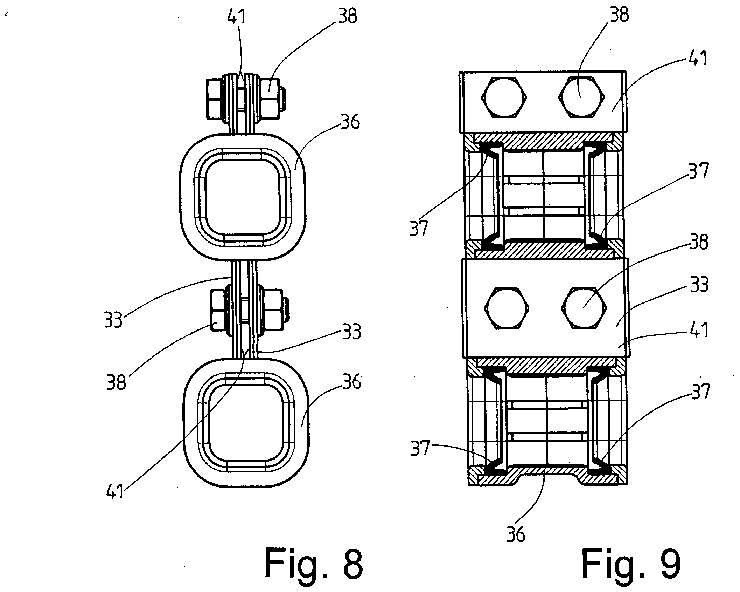

Die Wasserumlaufleitung 22 ist aus gleichen und vorzugsweise gleichlangen Leitungsabschnitten 31 gebildet. Mehrere hintereinanderliegende Leitungsabschnitte 31 bilden die gesamte Wasserumlaufleitung 22 der Strangtränke. Je nach Länge der Strangtränke variiert die Anzahl der hintereinander angeordneten gleichen, insbesondere gleichlangen, Leitungsabschnitte 31. In der Fig. 1 sind nur zwei Leitungsabschnitte 31 gezeigt. Hierauf ist die Erfindung aber nicht beschränkt. Die Strangtränke kann über eine beliebige Anzahl von Leitungsabschnitten 31 verfügen. In der Regel weist sie mehr als zwei Leitungsabschnitte 31 auf. Bei kurzen Strangtränken ist es aber auch denkbar, dass sie nur aus einem einzigen Leitungsabschnitt 31 bestehen. Die Leitungsabschnitte 31 sind an einer Verbindungsstelle 32 mit ihren zueinander gerichteten Stirnseiten zusammengesetzt. Dazu sind an jeder Verbindungsstelle 32 zwei lösbare Backen 33 vorgesehen. Die Backen 33 sind gleichermaßen ausgebildet und in spiegelbildlicher Relativanordnung zueinander von gegenüberliegenden Seiten gegen die Wasserumlaufleitung 22 gesetzt, und zwar mit Überlappung der benachbarten Endbereiche der zu verbindenden Leitungsabschnitte 31. Die beiden Backen 33 umschließen benachbarte Endbereiche der zur Bildung der Rohrstränge 23 und 24 dienenden Rohrstrangabschnitte 34 und 35 aufeinanderfolgender Leitungsabschnitte 31. Um die Rohrleitungsabschnitte 34 und 35 benachbarter Leitungsabschnitte 31 wasserdicht zu verbinden, bilden die zusammengesetzten Backen 33 eine Hülse 36 um den jeweiligen Rohrstrang 23 und 24. Die Hülsen 36 für jeden Rohrstrang 23 und 24 sind mit zwei voneinander beabstandeten Dichtungen 37 versehen. Dadurch sind die von den Backen 33 zu verbindenden benachbarten Endbereiche sowohl des Rohrstrangabschnitts 34 als auch des Rohrstrangabschnitts 35 mit jeweils einer Dichtung 37 gegen den Austritt von Wasser an der Verbindungsstelle 32 abgedichtet (Fig. 9). Durch mehrere Schrauben 38 (Fig. 8), die sich durch entsprechende Bohrungen in den zur Bildung der Stege 25 und 26 dienenden Stegabschnitten der Leitungsabschnitte 31 erstrecken, werden die Backen 33 von gegenüberliegenden Seiten gegen die benachbarten Endbereiche der Stegabschnitte gedrückt, und zwar soweit, dass Anlageflächen 41 der Backen 33 an den Wandungen der Stegabschnitte anliegen. Dabei werden die Dichtungen 37 umlaufend von außen gegen die Endbereiche der Rohrstrangabschnitte 34 und 35 gepresst und elastisch vorgespannt zur Erzeugung einer ausreichenden Dichtwirkung.

Die Rohrstränge 23 und 24 sind an gegenüberliegenden Enden der Tiertränke verbunden, so dass das Wasser in den Rohrsträngen 23, 24 umlaufend zirkulieren kann. Am hinteren Ende (bezogen auf die Darstellung in der Fig. 1 das rechte Ende) der Wasserumlaufleitung 22 befindet sich ein Rohrstrangverbinder 42, der auch als Entlüftungsventil und zum Spülen der Wasserumlaufleitung 22 dienen kann. Am gegenüberliegenden vorderen Ende (linkes Ende in der Fig. 1) sind die Rohrstränge 23 und 24 der Wasserumlaufleitung 22 wasserleitend verbunden durch eine Technikeinheit 43. Im gezeigten Ausführungsbeispiel ist in Strömungsrichtung des Wassers vor der Technikeinheit 43 ein Druckminderer 44 angeordnet. Der Druckminderer 44 an sich bekannter Bauart reduziert den Druck, mit dem das Wasser über eine Wasserversorgung bereitgestellt wird, auf einen niedrigeren Druck zum Betrieb der Tiertränke. Das im Druck reduzierte Leitungswasser gelangt vom Druckminderer 44 über einen Zulaufanschluss in die Technikeinheit 43.

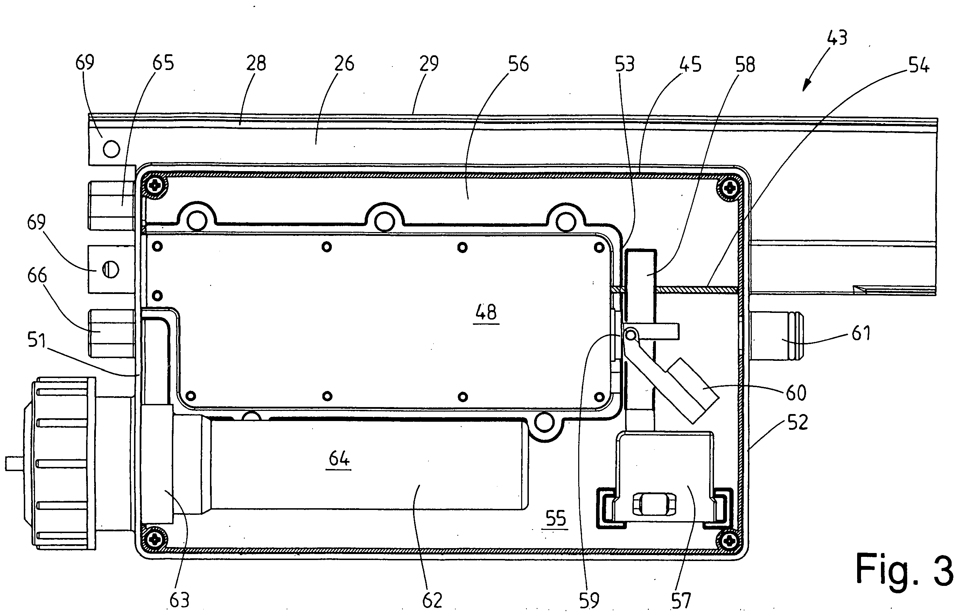

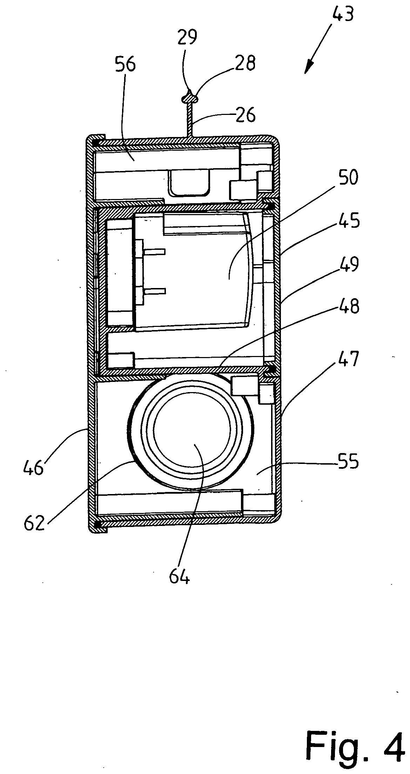

Die Technikeinheit 43 weist ein wasserdichtes Gehäuse 45 auf, in dem sich die wesentlichen zum Betrieb der Tiertränke erforderlichen Komponenten befinden. Das wasserdichte Gehäuse 45 ist aus zwei Halbschalen 46 und 47 gebildet, die zusammengeschraubt und durch Dichtungen abgedichtet sind. In der Halbschale 47 ist ein sich über die gesamte Breite des Gehäuses 45 erstreckendes, kleines Innengehäuse 48 gebildet, das zur Außenseite der Halbschale 47 offen ist. Diese offene Seite des Innengehäuses 48 ist flüssigkeitsdicht verschlossen durch einen Deckel 49, der bündig mit der Außenwandung der Halbschale 47 abschließt. Im Innengehäuse 48 sind die elektrischen Anschlüsse und die Steuerung 50 der Tiertränke untergebracht (Fig. 4). Das Innengehäuse 48 schließt an eine zur Wasserumlaufleitung 22 weisende senkrechte Stirnwandung 51 des Gehäuses 45 an, endet aber mit Abstand vor einer gegenüberliegenden, zum Druckminderer 44 weisenden Stirnwandung 52 des Gehäuses 45. In der Stirnwandung 52 befindet sich der Zulaufanschluss 61. Zwischen einer von der Stirnwandung 52 beabstandeten Endwandung 53 des Innengehäuses 48 und der Stirnwandung 52 befindet sich eine horizontale Trennwand 54 im Inneren des Gehäuses 45. Durch die Trennwand 54 und das Innengehäuse 48 wird das Innere des Gehäuses 45 wasserdicht aufgeteilt in einen unteren Vorratsbehälter 55 und einen oberen Überströmkanal 56 (Fig. 3). Der Vorratsbehälter 55 verfügt über ein wesentlich größeres Volumen als der Überstromkanal 56. Im gezeigten Ausführungsbeispiel ist der Vorratsbehälter 55 um ein Mehrfaches größer als der Überstromkanal 56, wozu das Innengehäuse 48 und die Trennwand 54 oberhalb der unteren Hälfte des Gehäuses 45 angeordnet sind.

Im Vorratsbehälter 55 im Gehäuse 45 befindet sich eine Pumpe 57, die beispielsweise im Prinzip einer Tauchpumpe entspricht. An der Druckseite ist die Pumpe 57 mit einem senkrechten Rohr 58 versehen, dass wasserdicht durch die Trennwand 54 in den Überstromkanal 56 geführt ist. Dadurch fördert die Pumpe 57 Wasser vom Vorratsbehälter 55 in den Überstromkanal 56 (Fig. 3). Im Vorratsbehälter 55 befindet sich auch noch ein Schwimmerschalter 59, der im gezeigten Ausführungsbeispiel über der Pumpe 57 angeordnet ist. Der Schwimmerschalter 59 weist einen um eine horizontale Drehachse schwenkbaren Schwimmerkörper 60 auf, der beim eventuellen Absinken des Wasserstands im Vorratsbehälter 55 unter ein bestimmtes Mindestniveau die Pumpe 57 ausschaltet, damit sie nicht trockenläuft.

Die gezeigte Tiertränke verfügt über eine Behandlungseinrichtung für das in der Tiertränke zirkulierende Wasser. Insbesondere handelt es sich bei der Behandlungseinrichtung um eine ultraviolettes Licht erzeugende UV-Lampe 62. Die UV-Lampe 62 ist im Vorratsbehälter 55 im Gehäuse 45 angeordnet (Fig. 3). Die UV-Lampe 62 ist mit einem Sockel 63 wasserdicht in der Stirnwandung 51 festgeschraubt, und zwar so, dass sie als Ganzes von außen in das Gehäuse 45 einsetzbar ist. Dabei befindet sich eine Behandlungskammer 64 der UV-Lampe 62 vollständig im Vorratsbehälter 55.

Die Tiertränke kann eine oder mehrere weitere Behandlungseinrichtungen für das zirkulierende Wasser aufweisen. Hierbei kann es sich um eine Dosiereinrichtung zum Zudosieren von Zusätzen (vorzugsweise flüssigen Zusätzen) zum Wasser handeln. Diese Einrichtung kann beispielsweise eine Medikamentiereinrichtung sein. Des Weiteren kann eine Einrichtung zum Kühlen und/oder Erwärmen des Wassers vorgesehen sein. Diese weiteren Behandlungseinrichtungen sind vorzugsweise auch im Bereich der Technikeinheit 43 angeordnet, um das Wasser im Vorratsbehälter 55 zu kühlen und/oder zu erwärmen und gegebenenfalls Zusätze wie zum Beispiel Medikamente dem Wasser im Bereich des Vorratsbehälters 55 oder auch im Überströmkanal 56 zudosieren.

In der Stirnwandung 51 des Gehäuses 45 ist ein mit dem Überströmkanal 56 in Verbindung stehender Ausflussanschluss 65 angeordnet. Über den Ausflussanschluss 65 strömt Wasser aus dem Überströmkanal 56 in den oberen Rohrstrang 23 der Wasserumlaufleitung 22. Des Weiteren ist der Stirnwandung 51 des Gehäuses 45 ein Zulaufanschluss 66 zugeordnet, der im Vorratsbehälter 55 mündet. Durch den Zulaufanschluss 66 gelangt das Wasser aus dem unteren Rohrstrang 24 der Wasserumlaufleitung 22 in den Vorratsbehälter 55 zurück.

Der Rohrstrangverbinder 42 am der Technikeinheit 43 gegenüberliegenden hinteren Ende der Wasserumlaufleitung 22 weist einen wasserdicht mit dem Ende des oberen Rohrstrangs 23 verbundenen Zulaufanschluss 67 und einen darunter liegenden mit dem unteren Rohrstrangabschnitt 24 wasserdicht verbundenen Auslaufanschluss 68 auf. Die Verbindung der hinteren Enden der Rohrstränge 23 und 24 mit dem Zulaufanschluss 67 und dem Auslaufanschluss 68 des Rohrstrangverbinders 42 erfolgt auch lösbar durch die Backen 33, die sich an den Verbindungsstellen 32 der Leitungsabschnitte 31 befinden. Das vom Rohrstrang 23 kommende Wasser wird im Rohrstrangverbinder 42 umgelenkt zum Rohrstrang 24, in dem das Wasser zurückfließt zum Vorratsbehälter 55 im Gehäuse 45 der Technikeinheit 43. Der Rohrstrangverbinder 42 verfügt über zwei auf gegenüberliegenden Seiten des Zulaufanschlusses 67 liegende Laschen 69, womit der Rohrstrangverbinder 42 an den Stegen 25 und 26 der Wasserumlaufleitung 22 anschraubbar ist.

Der hier gezeigte Rohrstrangverbinder 42 dient gleichzeitig zur Entlüftung der Wasserumlaufleitung 22 und zum Spülen derselben, wenn die Tiertränke gereinigt werden soll. Dazu ist ein oben offener Überströmkanal 70 im Rohrstrangverbinder 42 nach oben verlängert durch ein Entlüftungsrohr 71 (Fig. 1). Das normalerweise offene obere Ende des Entlüftungsrohrs 71 kann zum Spülen der Tiertränke durch einen Verschluss 72 oder ein Ventil geschlossenen werden. Am unteren Ende des Überstromkanals 70 weist der Rohrstrangverbinder 42 einen dem Auslaufanschluss 68 gegenüberliegenden Spülanschluss 73 auf. Der Spülanschluss 73 ist während des Betriebs der Tiertränke wasserdicht verschließbar.

Nachfolgend wird das Funktionsprinzip der zuvor beschriebenen Tiertränke erläutert:
Während des Betriebs der Tiertränke ist der Spülanschluss 73 des Rohrstrangverbinders 42 geschlossen und das Entlüftungsrohr 71 geöffnet.

Während des Betriebs der Tiertränke ist die Pumpe 57 im Gehäuse 45 der Technikeinheit 43 in Betrieb. Die Pumpe 45 kann durchgehend in Betrieb sein, aber auch nur periodisch. Während des Betriebs der Pumpe 57 wird das Wasser in der Tiertränke permanent umgewälzt. Durch die Pumpe 57 wird Wasser aus dem Vorratsbehälter 55 in den Überströmkanal 56 im Gehäuse 45 gepumpt. Vom Überströmkanal 56 gelangt das Wasser in den Rohrstrang 23. Das den Rohrstrang 23 durchströmende Wasser wird am hinteren Ende der Wasserumlaufleitung 22 vom Rohrstrangverbinder 42 umgeleitet in den unteren Rohrstrang 24, von wo das Wasser an den Tränkeventilen 20 vorbei zurückfließt zum Vorratsbehälter 55 im Gehäuse 45 der Technikeinheit 43. Solange die Pumpe 57 in Betrieb ist, ist das Wasser in der Wasserumlaufleitung 22 ständig in Bewegung, und zwar auch dann, wenn an den Tränkeventilen 20 kein Wasser von den Tieren entnommen wird. Das Wasser durchströmt also die erfindungsgemäße Tiertränke während des Betriebs der Pumpe 57 ständig in einem geschlossenen Kreislauf. Falls sich nicht genügend Wasser im Vorratsbehälter 55 befinden sollte, wodurch die Gefahr des Trockenlaufens der Pumpe 45 bestehen könnte, wird vom Schwimmerschalter 59 die Pumpe 45 ausgeschaltet, bis sich wieder genügend Wasser im Vorratsbehälter 55 befindet.

Die Menge des umgewälzten Wassers verringert sich mit der Zeit durch die von den Tieren an den Tränkeventilen 20 entnommene Wassermenge. Dadurch sinkt der Wasserpegel im Vorratsbehälter 55. Dann wird vom Druckminderer 44 dem Vorratsbehälter 55 Wasser zugeführt, bis ein ausreichender Wasservorrat sich wieder im Vorratsbehälter 55 befindet. Der Wasserpegel im Vorratsbehälter 55 wird so vom Druckminderer 44 stets in einem Bereich gehalten wird, der ein Trockenlaufen der Pumpe 45 verhindert.

Beim Umwälzen des Wassers findet ein ständiger Austausch des Wassers im Vorratsbehälter 55 statt. Das sich im Vorratsbehälter 55 befindliche Wasser wird von der UV-Lampe 62 der Behandlungseinrichtung mit ultraviolettem Licht bestrahlt. Dabei werden Schadstoffe, wie Keime, Bakterien und/ oder Pilze aus dem Wasser entfernt. Hierbei kommt es zu einer mikrobiellen Behandlung des Wassers im Vorratsbehälter 55. Das Wasser kann durch die UV-Bestrahlung nicht nur entkeimt werden, es kann auch eine Sterilisation, Desinfektion und/oder Oxydation des Wassers im Vorratsbehälter 55 stattfinden. Durch den Kreislauf des Wassers durch die Tiertränke wird das gesamte sich in der Tiertränke befindliche Wasser kontinuierlich bestrahlt. Ebenso ist eine kontinuierliche Behandlung des Wassers auf andere Weise möglich, beispielsweise ein Kühlen bzw. Erwärmen des Wassers oder auch die dosierte Zugabe von Zusätzen zum Wasser, insbesondere Medikamenten, Nährstoffen oder dergleichen.

Zum Spülen der Tiertränke wird an den Spülanschluss 73 des Rohrstrangverbinders 42 ein Wasserschlauch angeschlossen, um Spülwasser abzuleiten. Das Entlüftungsrohr 71 des Rohrstrangverbinders 42 wird geschlossen. Dem Vorratsbehälter 55 der Technikeinheit 43 am Anfang der Tiertränke wird vom Druckminderer 44 Wasser mit unvermindertem Leitungsdruck zugeführt. Das als Spülwasser dienende Wasser gelangt dann beim Spülen der Tiertränke unter Umgehung der Pumpe 57 mit dem vollen Leitungsdruck in beide Rohrstränge 23 und 24. Vom Spülwasser werden somit beide Rohrstränge 23 und 24 gleichzeitig und gemeinsam gespült. Zum Spülen strömt das Wasser also nicht im Kreislauf durch die Rohrstränge 23 und 24. Das Spülwasser fließt im Rohrstrangverbinder 42 aus beiden Rohrsträngen 23 und 24 zusammen, so dass über den Spülanschluss 43 des Rohrstrangverbinders 42 das Spülwasser aus beiden Rohrsträngen 23 und 24 die Tiertränke verlässt.

**Bezugszeichenliste:**

| | | | |
|---|---|---|---|
| 20 | Tränkeventil | 50 | Steuerung |
| 21 | Ventilstift | 51 | Stirnwandung |
| 22 | Wasserumlaufleitung | 52 | Stirnwandung |
| 23 | Rohrstrang | 53 | Endwandung |
| 24 | Rohrstrang | 54 | Trennwand |
| 25 | Steg | 55 | Vorratsbehälter |
| 26 | Steg | 56 | Überströmkanal |
| 27 | Mittelebene | 57 | Pumpe |
| 28 | Kantenprofil | 58 | Rohr |
| 29 | Spitze | 59 | Schwimmerschalter |
| 30 | Aufhänger | 60 | Schwimmerkörper |
| 31 | Leitungsabschnitt | 61 | Zulaufanschluss |
| 32 | Verbindungsstelle | 62 | UV-Lampe |
| 33 | Backe | 63 | Sockel |
| 34 | Rohrstrangabschnitt | 64 | Behandlungskammer |
| 35 | Rohrstrangabschnitt | 65 | Ausflussanschluss |
| 36 | Hülse | 66 | Zulaufanschluss |
| 37 | Dichtung | 67 | Zulaufanschluss |
| 38 | Schraube | 68 | Auslaufanschluss |
| | | 69 | Lasche |
| | | 70 | Überströmkanal |
| 41 | Anlagefläche | 71 | Entlüftungsrohr |
| 42 | Rohrstrangverbinder | 72 | Verschluss |
| 43 | Technikeinheit | 73 | Spülanschluss |
| 44 | Druckminderer | 74 | Außengewinde |
| 45 | Gehäuse | | |
| 46 | Halbschale | | |
| 47 | Halbschale | | |
| 48 | Innengehäuse | | |
| 49 | Deckel | | |

## Patentansprüche

1. Tiertränke, vorzugsweise Strangtränke, mit wenigstens einer Wasserversorgungsleitung und einer Mehrzahl von Tränkeventilen (20), die der Wasserversorgungsleitung zugeordnet sind, wobei die Wasserversorgungsleitung als eine Wasserumlaufleitung (22) mit zwei parallelen Rohrsträngen (23, 24) ausgebildet ist, die an ihren Enden wasserführend verbunden sind und die Rohrstränge (23, 24) zusammenhängend ausgebildet sind, indem sie miteinander verbunden sind, **dadurch gekennzeichnet, dass** die zwei parallelen zusammenhängenden Rohrstränge (23, 24) voneinander beabstandet und durch einen aufrechten Steg (25) miteinander verbunden sind, wobei der Steg (25) und die an seinen gegenüberliegenden Längsrändern angeordneten Rohrstränge (23, 24) einstückig zusammenhängend ausgebildet sind.

2. Tiertränke nach Anspruch 1, **dadurch gekennzeichnet, dass** der Rohrstrang (23, 24) einen weiteren aufrechten Steg (26) aufweist.

3. Tiertränke nach Anspruche 2, **dadurch gekennzeichnet, dass** der Steg (26) einstückig mit dem Rohrstrang (23) verbunden ist, vorzugsweise an den Rohrstrang (23) angeformt ist.

4. Tiertränke nach Anspruch 1, **dadurch gekennzeichnet, dass** einem Rohrstrang (23, 24), vorzugsweise einem unteren der übereinander angeordneten Rohrstränge (23, 24) die Tränkeventile (20), insbesondere alle Tränkeventile (20), zugeordnet sind.

5. Tiertränke nach einem der vorhergehenden Ansprüche, **dadurch gekennzeichnet, dass** die Wasserumlaufleitung (22) aus mehreren lösbar miteinander verbundenen Leitungsabschnitten (31) gebildet ist, wobei vorzugsweise die beiden zusammenhängenden Rohrstränge (23, 24) aus mehreren lösbar miteinander verbundenen Rohrstrangabschnitten (34, 35) gebildet sind und/oder die Rohrstrangabschnitte (34, 35) an ihren benachbarten Enden durch Verbindungsmittel wasserdicht verbunden sind, wobei die Verbindungsmittel vorzugsweise lösbar ausgebildet sind.

6. Tiertränke nach einem der vorhergehenden Ansprüche, **gekennzeichnet durch** mindestens eine Pumpe (57) zum Umwälzen des Wassers in der Wasserumlaufleitung (22), wobei die mindestens eine Pumpe (57) vorzugsweise aus einem Vorratsbehälter (55) mit Wasser versorgbar ist.

7. Tiertränke nach Anspruch 6, **dadurch gekennzeichnet, dass** die mindestens eine Pumpe (57) und/oder der Vorratsbehälter (55) einem Ende der Wasserumlaufleitung (22), insbesondere an einem Ende der Wasserumlaufleitung (22) liegenden Ende der Rohrstränge (23, 24), zugeordnet ist zum Umpumpen des aus einem Rohrstrang (24) zurückfließenden Wassers in den anderen Rohrstrang (23).

8. Tiertränke nach Anspruch 7, **dadurch gekennzeichnet, dass** dem Vorratsbehälter (55) mindestens ein Zulaufanschluss (61) für Wasser aus einer Wasserversorgung zugeordnet ist, und bevorzugt dem Zulaufanschluss (61) oder vor dem Zulaufanschluss (61) ein Ventil vorgesehen ist, das vorzugsweise in Abhängigkeit vom Wasserstand im Vorratsbehälter (55) betätigbar ist.

9. Tiertränke nach einem der Ansprüche 6 bis 8, **dadurch gekennzeichnet, dass** die Enden der Rohrstränge (23, 24) an der dem Vorratsbehälter (55) gegenüberliegenden Seite der Wasserumlaufleitung (22) wasserleitend verbunden sind, wobei gegebenenfalls der wasserleitenden Verbindung der Rohrstränge (23, 24) eine Entlüftung und/oder ein Spülanschluss (73) zugeordnet sind, die vorzugsweise bei Bedarf verschließbar sind.

10. Tiertränke nach Anspruch 1, **dadurch gekennzeichnet, dass** der Wasserversorgungsleitung mindestens eine Behandlungseinrichtung für das Wasser zugeordnet ist.

11. Tiertränke nach Anspruch 10, **dadurch gekennzeichnet, dass** die Behandlungseinrichtung zur mikrobiellen Behandlung des Wassers ausgebildet ist, wobei vorzugsweise die Behandlungseinrichtung mindestens eine UV-Lampe (62) aufweist.

12. Tiertränke nach Anspruch 10 oder 11, **gekennzeichnet durch** eine Temperierungseinrichtung zum Kühlen und/oder Erwärmen des Wassers und/oder eine Dosiereinrichtung zum Zugeben von Zusätzen, insbesondere Nährstoffen und/oder Medikamenten, zum Wasser.

13. Tiertränke nach einem der Ansprüche 10 bis 12, **dadurch gekennzeichnet, dass** die Behandlungseinrichtung, die Dosiereinrichtung und/oder die Temperierungseinrichtung dem Vorratsbehälter (55) zugeordnet sind.

## Claims

1. An animal drinker, preferably a line drinker, having at least one water supply line and a plurality of drinking valves (20) which are assigned to the water supply line, wherein the water supply line is realized as a water circulation line (22) with two parallel pipe strings (23, 24), which are connected at their ends in a water-conducting manner and the pipe strings (23, 24) are configured as being continuous in that they are connected to each other, **characterized in that** the two continuous parallel pipe strings (23, 24) are spaced apart from one another and connected to one another by an upright web (25), with the web (25) and the pipe strings (23, 24) arranged on its opposing longitudinal edges configured as being joined together as a single piece.

2. The animal drinker according to Claim 1, **characterized in that** the pipe string (23, 24) has an further upright web (26).

3. The animal drinker according to Claim 2, **characterized in that** the web (26) is connected to the pipe string (23) as a single piece, preferably being integrally moulded on the pipe string (23).

4. The animal drinker according to Claim 1, **characterized in that** the drinking valves (20), in particular all drinking valves (20), are assigned to a pipe string (23, 24), preferably to a bottom pipe string of the pipe strings (23, 24) arranged one above the other.

5. The animal drinker according to one of the preceding claims, **characterized in that** the water circulation line (22) is formed by a plurality of line sections (31) detachably connected to one another, wherein preferably the two joined pipe strings (23, 24) are formed from a plurality of pipe string sections (34, 35) which can be detachably connected to one another and/or a watertight connection is made at the adjacent ends of the pipe string sections (34, 35) by joining means, wherein the joining means are preferably configured to be detachable.

6. The animal drinker according to one of the preceding claims, **characterized by** at least one pump (57) for circulating the water in the water circulation line (22), wherein the at least one pump (57) can be supplied with water preferably from a reservoir (55).

7. The animal drinker according to Claim 6, **characterized in that** the at least one pump (57) and/or the reservoir (55) are assigned to an end of the water circulation line (22), in particular to an end of the pipe string (23, 24) located at one end of the water circulation line (22) for the purpose of pumping water returning from one pipe string (24) over to the other pipe string (23).

8. The animal drinker according to Claim 7, **characterized in that** the reservoir (55) is assigned at least one inlet connection (61) for water from a water supply, and preferably the inlet connection (61) or a position upstream of the inlet connection (61) is assigned a valve that can be actuated preferably as a function of the water level in the reservoir (55).

9. The animal drinker according to one of the claims 6 to 8, **characterized in that** the ends of the pipe strings (23, 24) on the side of the water circulation line (22) opposite to the reservoir (55) are connected to conduct water, wherein the water-conducting connection of the pipe strings (23, 24) is assigned a venting means and/or a flushing connection (73) where appropriate, which preferably can be closed when necessary.

10. The animal drinker according to Claim 1, **characterized in that** the water supply line is assigned at least one water treatment device.

11. The animal drinker according to Claim 10, **characterized in that** the treatment device is designed for the microbial treatment of the water, wherein preferably the treatment device has at least one UV lamp (62).

12. The animal drinker according to Claim 10 or 11, **characterized by** a temperature control system for cooling and/or heating the water and/or a metering device for the dosage of supplements, in particular nutrients and/or medicaments, to the water.

13. The animal drinker according to one of the Claims 10 to 12, **characterized in that** the treatment device, the metering device and/or the temperature control system are assigned to the reservoir (55).

## Revendications

1. Abreuvoir, de préférence abreuvoir en ligne, comprenant au moins un conduit d'alimentation en eau et une pluralité de vannes d'abreuvoir (20) qui sont associées au conduit d'alimentation en eau, le conduit d'alimentation en eau étant conçu comme un conduit de circulation d'eau (22) muni de deux lignes de tubes parallèles (23, 24) reliées en communication fluidique à leurs extrémités et les deux lignes de tubes (23, 24) étant conçues pour être contiguës tout en étant reliées entre elles, **caractérisé en ce que** les deux lignes de tubes (23, 24), contiguës et parallèles, sont espacées l'une de l'autre et sont reliées entre elles par une nervure verticale (25), la nervure (25) et les lignes de tubes (23, 24), disposées au niveau de ses bords longitudinaux opposés, sont conçues de manière contiguës d'une seule pièce.

2. Abreuvoir selon la revendication 1, **caractérisé en ce que** la ligne de tubes (23, 24) comporte une autre nervure verticale (26).

3. Abreuvoir selon la revendication 2, **caractérisé en ce que** la nervure (26) est reliée d'une seule pièce à la ligne de tubes (23), de préférence est formée sur la ligne de tubes (23).

4. Abreuvoir selon la revendication 1, **caractérisé en ce que** les vannes d'abreuvoir (20), en particulier toutes les vannes d'abreuvoir (20), sont associées à une ligne de tubes (23, 24), de préférence une ligne de tubes inférieure des lignes de tubes superposées (23, 24).

5. Abreuvoir selon l'une des revendications précédentes, **caractérisé en ce que** le conduit de circulation d'eau (22) est constitué d'une pluralité de tronçons de conduit (31) reliés entre eux de manière amovible, les deux lignes de tubes contiguës (23, 24) étant formées d'une pluralité de tronçons de ligne de tubes (34, 35) reliés entre eux de manière amovible et/ou les tronçons de ligne de tubes (34, 35) étant reliés de manière étanche à leurs extrémités adjacentes par des moyens de liaison, les moyens de liaison étant de préférence amovibles.

6. Abreuvoir selon l'une des revendications précédentes, **caractérisé par** au moins une pompe (57) destinée à faire circuler l'eau dans le conduit de circulation d'eau (22), l'au moins une pompe (57) étant de préférence alimentée en eau par un réservoir (55).

7. Abreuvoir selon la revendication 6, **caractérisé en ce que** l'au moins une pompe (57) et/ou le réservoir (55) sont associés à une extrémité du conduit de circulation d'eau (22), en particulier à une extrémité des lignes de tubes (23, 24), se trouvant à une extrémité du conduit de circulation d'eau (22), pour pomper l'eau, en recirculation depuis une ligne de tubes (24), jusque dans l'autre ligne de tubes (23).

8. Abreuvoir selon la revendication 7, **caractérisé en ce que** le réservoir (55) est associé à au moins un raccord d'entrée (61) destiné à l'eau provenant d'une alimentation en eau, et de préférence une vanne, qui peut avantageusement être actionnée en fonction du niveau d'eau dans le réservoir (55), est prévue de préférence du raccord d'entrée (61) ou en amont du raccord d'entrée (61).

9. Abreuvoir selon l'une des revendications 6 à 8, **caractérisé en ce que** les extrémités des lignes de tubes (23, 24) sont reliées en communication fluidique au côté, opposé au réservoir (55), du conduit de circulation d'eau (22), la liaison de communication fluidique des lignes de tubes (23, 24) étant éventuellement associée à un évent et/ou à un raccord de rinçage (73), pouvant être de préférence fermé si nécessaire.

10. Abreuvoir selon la revendication 1, **caractérisé en ce que** le conduit d'alimentation en eau est associé à au moins un dispositif de traitement de l'eau.

11. Abreuvoir selon la revendication 10, **caractérisé en ce que** le dispositif de traitement est conçu pour le traitement microbien de l'eau, le dispositif de traitement comportant de préférence au moins une lampe UV (62).

12. Abreuvoir selon la revendication 10 ou 11, **caractérisé par** un dispositif de régulation de température destiné à refroidir et/ou chauffer l'eau et/ou un dispositif de dosage destiné à ajouter des additifs, en particulier des nutriments et/ou des médicaments, à l'eau.

13. Abreuvoir selon l'une des revendications 10 à 12, **caractérisé en ce que** le dispositif de traitement, le dispositif de dosage et/ou le dispositif de régulation de température sont associés au réservoir (55).
